Europäisches Patentamt

European Patent Office

Office européen des brevets

(19)

(11) Numéro de publication : **0 055 986**

**B1**

(12)

# FASCICULE DE BREVET EUROPÉEN

(45) Date de publication du fascicule du brevet :
07.05.86

(21) Numéro de dépôt : 82100018.9

(22) Date de dépôt : 05.01.82

(51) Int. Cl.⁴ : **G 07 F  7/10, H 04 L  9/02**

(54) **Procédé et dispositif de sécurité pour communication tripartite de données confidentielles.**

(30) Priorité : 07.01.81 FR 8100128

(43) Date de publication de la demande :
14.07.82 Bulletin 82/28

(45) Mention de la délivrance du brevet :
07.05.86 Bulletin 86/19

(84) Etats contractants désignés :
**AT BE CH DE FR GB IT LI LU NL SE**

(56) Documents cités :
**EP-A- 0 007 002**
**EP-A- 0 029 894**
**EP-A- 0 030 381**
**FR-A- 2 394 131**
**GB-A- 2 019 060**
**US-A- 3 806 874**
**US-A- 4 001 550**
**US-A- 4 214 230**

(73) Titulaire : **BULL TRANSAC**
**1, rue Ampère**
**F-91301 Massy (FR)**

(72) Inventeur : **Decavele, Dominique**
**Chemin de la Rousterie**
**F-78460 Chevreuse (FR)**
Inventeur : **Fournier, Jean-Pierre**
**18, rue de la Procession**
**F-75015 Paris (FR)**

(74) Mandataire : **Weinmiller, Jürgen et al**
**Zeppelinstrasse 63**
**D-8000 München 80 (DE)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

# Description

La présente invention concerne les procédés et dispositifs de sécurité pour communication tripartite de données confidentielles sous forme numérique, elle s'applique aux systèmes permettant l'échange d'informations entre des porteurs de dispositifs accréditifs et des machines de traitement centralisé par l'intermédiaire de terminaux spécifiques indépendants, non surveillés. Plus particulièrement l'invention permet d'identifier, d'authentifier et éventuellement de crypter les échanges de données entre un porteur légitime de dispositif accréditif et une machine de traitement centralisé, distante, par l'intermédiaire d'un terminal spécifique indépendant, de manière à préserver la confidentialité des informations privatives lorsque des risques d'indiscrétion sont envisageables.

De manière connue, de tels dispositifs accréditifs sont employés comme moyen d'autorisation d'accès, un exemple connu en est la carte accréditive bancaire qui autorise le retrait d'argent à certains terminaux distributeurs et le paiement à d'autres terminaux spécifiques. Dans l'exemple évoqué ci-dessus il est classique que certains terminaux soient pratiquement hors de la surveillance des banques qui détiennent les machines de traitement centralisé des transactions et aussi hors de la surveillance des détenteurs de dispositifs accréditifs.

Il est connu par la demande de brevet européen EP-A 00 30 381, faisant partie de l'état de la technique aux termes de l'Art. 54 (3) CBE, un procédé et un dispositif pour la sécurité de documents permettant de s'assurer que le document, en l'occurrence une carte de crédit, n'a pas été falsifiée. Le dispositif comprend une carte avec une mémoire de clés, une mémoire de texte en clair, une mémoire de texte codé et éventuellement un calculateur de décodage pour décoder le texte codé au moyen de la clé et un comparateur pour comparer le résultat du décodage avec le texte en clair mémorisé. Toutefois, ce document ne concerne ni le problème de l'utilisation d'une carte et la sécurité de l'échange des informations entre la carte et un terminal, ni le problème d'identification d'un porteur légitime.

Etant donné que de tels dispositifs ont pour but de réserver les accès qu'ils contrôlent aux seuls utilisateurs autorisés, il est à craindre que des tiers malintentionnés ne cherchent à profiter frauduleusement des possibilités offertes, en se faisant passer pour un utilisateur autorisé ou en falsifiant des données.

Ceci a conduit à vérifier l'identité des porteurs de dispositifs accréditifs par l'intermédiaire des terminaux en comparant des données numériques confidentielles enregistrées sur les dispositifs accréditifs avec des données confidentielles tabulées par les porteurs.

Ainsi, le document EP-A 00 07 002 concerne un terminal de transaction pour dispositif accréditif tel qu'une carte, dans lequel le système de contrôle est basé sur le fait que la clé de cryptage PINTRUE pour une transaction est déterminable au niveau du terminal par combinaison du code confidentiel d'utilisateur PIN que celui-ci tabule sur le terminal avec le code d'identification PIN OFF enregistré sur la carte et communiqué par cette dernière au terminal avec le numéro de compte ACCT. Au niveau du contrôleur on combine une clé maître K avec le numéro de compte bancaire ACCT écrit en clair sur la carte et transmis par celle-ci au contrôleur via le terminal, puis on compare le résultat du codage de ACCT par le contrôleur avec le codage de ACCT par la clé PINTRUE transmis au contrôleur.

Toutefois, l'on peut craindre une éventuelle possibilité de prise de connaissance de ces données confidentielles au niveau des terminaux et leur utilisation pour modifier ou créer des informations. Un tel système présente l'inconvénient de n'offrir aucune protection vis-à-vis d'un terminal hostile, et sa sécurité peut s'effondrer totalement.

Ainsi il est connu par la demande de brevet européen EP-A 00 29 894, faisant partie de l'état de la technique aux termes de l'Art. 54 (3) CBE, un système permettant l'identification du porteur légitime et empêchant des commerçants malhonnêtes disposant des terminaux d'accéder aux informations confidentielles pour les utiliser frauduleusement. Le système comprend une carte, un terminal personnel portable « XATR », un terminal d'utilisation et d'identification « U/I », utilise un ou deux générateurs de mots aléatoires et nécessite la présence sur la carte de deux registres « ERWT et ERWA » pour éviter que les terminaux personnels portables « XATR » puissent être modifiés de façon à transmettre au terminal « U/I » une information qui serait interprétée comme exacte. Pour éviter ceci le système prévoit d'effectuer d'une part le transfert d'un registre de la carte vers un registre du terminal en communiquant d'abord les bits les moins significatifs et d'autre part le transfert du deuxième registre du terminal vers le deuxième registre de la carte en communiquant les bits les plus significatifs en premier. L'invention vise les mêmes buts tout en évitant la complication au niveau des registres et des échanges des registres.

De même comme divulgué dans la demande de brevet français FR 2 421 426 on crypte souvent les données transmises par des liaisons sur des distances importantes pour éviter la saisie frauduleuse d'informations confidentielles par branchement d'un dispositif en dérivation sur les liaisons et la transmission de fausses informations. Cette demande de brevet français enseigne l'utilisation d'une unité d'accès, assignée à un utilisateur, à laquelle est associée une clé de cryptage pour crypter les données transmises par un terminal. L'unité d'accès est montée entre un terminal et un modem d'accès à un calculateur par l'intermédiaire d'une ligne téléphonique, un deuxième modem et un contrôleur décodeur. L'unité d'accès après son branchement génère un code d'accès en combinant un mot de passe avec un nombre pseudo-aléatoire et transmet, après codage par le modem, ce code d'accès précédé d'un préfixe d'identification de l'unité d'accès au calculateur. Le contrôleur, après réception d'un signal téléphonique et à réception du préfixe recherche dans une table mémoire le préfixe identique pour s'assurer de l'utilisation d'une unité d'accès autorisée. Cette table fournit également le code d'accès correspondant à l'unité d'accès dont on a reçu le préfixe. Lorsqu'il y a identité, le contrôleur indique l'acceptation du code d'accès de façon que l'unité d'accès puisse générer le nombre séquentiel pseudo-aléatoire suivant et le contrôleur génère en synchronisme le nombre séquentiel pseudo-aléatoire suivant pour le ranger ensuite dans sa mémoire. Le contrôleur retrouve ensuite dans sa mémoire la clé de cryptage utilisée par l'unité d'accès, dans le dispositif de cryptage des données fournies par le terminal. Ce dispositif de cryptage est disposé entre le terminal et le modem. La transmission des données nécessite l'attente de l'acceptation du code d'accès par le calculateur et par conséquent empêche tout mode de fonctionnement dans lequel le terminal ne serait pas relié au calculateur.

L'invention, telle qu'elle est revendiquée, a donc pour but de remédier aux inconvénients mentionnés de l'art antérieur.

Selon une première variante de l'invention toute communication entre un porteur de dispositif accréditif et une machine de traitement centralisé comporte les étapes suivantes :

— détermination par le dispositif accréditif d'une clé d'individualisation obtenue par combinaison du code confidentiel, introduit dans le dispositif accréditif après connexion de ce dernier dans un terminal spécifique, avec une base clé mémorisée de manière permanente dans le dispositif accréditif ;

— détermination par le dispositif accréditif, d'un chiffre clé d'identification du porteur et d'identification de la transaction par combinaison des données de transaction introduites par le porteur avec la clé d'individualisation fournie par le dispositif accréditif à réception du code confidentiel du porteur ;

— communication du chiffre clé, des données de transaction, de l'identité du dispositif accréditif à la machine de traitement centralisée par le terminal spécifique sur la base des données reçues du dispositif accréditif et de données propres au terminal.

Selon une deuxième variante de l'invention toute communication entre un porteur de dispositif accréditif et une machine de traitement centralisé comporte les étapes suivantes :

— comparaison du code confidentiel, introduit par le porteur après connexion à un terminal spécifique du dispositif accréditif qu'il utilise, avec un code confidentiel mémorisé dans le dispositif accréditif ;

— détermination par le dispositif accréditif, d'un chiffre-clé d'identification du porteur et d'authentification de la transaction par combinaison des données de transaction introduites par le porteur avec une clé d'individualisation mémorisée de manière permanente dans le dispositif accréditif si le code confidentiel introduit correspond au code confidentiel mémorisé ;

— communication du chiffre-clé, des données de transaction, de l'identité du dispositif accréditif à la machine de traitement centralisé par ce terminal spécifique sur la base des données reçues du dispositif accréditif et de données propres au terminal.

D'autres caractéristiques et avantages de l'invention seront évoqués au cours de la description et en relation avec les figures mentionnées ci-dessous.

La figure 1 présente les éléments essentiels d'un système de communication de données confidentielles entre porteur de dispositif accréditif et machine de traitement centralisé par l'intermédiaire de terminaux spécifiques, selon l'invention.

La figure 2 présente les éléments essentiels d'un système de communication de données confidentielles avec cryptage, selon l'invention.

La figure 3 présente les éléments essentiels d'un système de communication différé de données confidentielles selon l'invention.

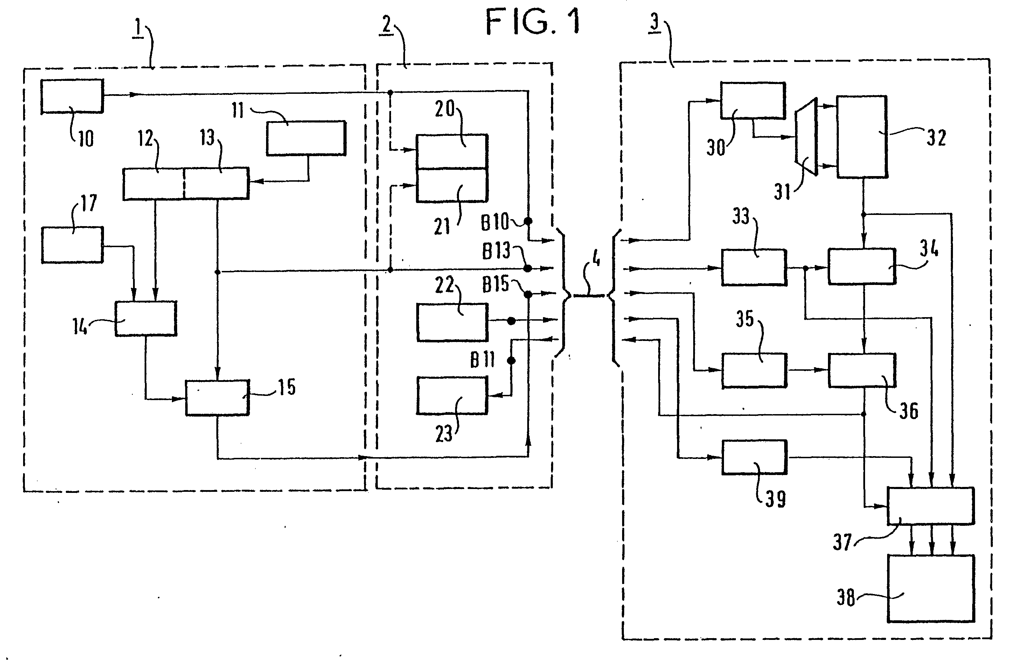

Le système schématisé figure 1 est constitué d'une pluralité de dispositifs accréditifs susceptibles d'être connectés à des terminaux spécifiques pour permettre à leurs titulaires d'échanger des informations avec des machines de traitement centralisé ; un dispositif accréditif 1, un terminal 2, et une machine de traitement 3 sont succinctement représentés sur la figure 1 par leurs éléments nécessaires à la compréhension de l'invention.

De manière connue et évoquée plus haut chaque dispositif accréditif, tel que 1, est attribué à un titulaire particulier pour ses besoins propres. Ce titulaire est classiquement autorisé à échanger des informations avec une machine de traitement centralisée, telle que 3, à partir du moment où il trouve un terminal spécifique, tel que 2, pour y connecter le dispositif accréditif 1 qu'il détient et où il est capable de justifier qu'il est bien habilité à utiliser ce dispositif accréditif 1 en fournissant la preuve qu'il connaît le code confidentiel en régissant l'usage.

En ce but et de manière classique, chaque dispositif accréditif 1, qui est préférablement du type carte, comporte une mémoire de données d'identité 10 ; cette mémoire 10 est une mémoire permanente accessible en lecture par les terminaux spécifiques 2 et elle contient des données binaires qui différencient le dispositif accréditif 1 qui la comporte, de tous les autres.

Cette mémoire 10 est par exemple une mémoire magnétique, une mémoire câblée ou une mémoire électronique lisible et non effaçable par les moyens classiques.

Dans l'exemple de réalisation présenté à la figure 1 on a supposé que les travaux spécifiques 2 étaient reliés aux machines de traitement centralisé 3 par des liaisons de transmission symbolisées par 4 qui sont établies au moins pour la durée de chaque transaction.

Les données d'identité contenues dans la mémoire 10 d'un dispositif accréditif 1 sont transmises à la machine de traitement centralisé 3 reliée au terminal spécifique 2 auquel le dispositif accréditif 1 est connecté pour une transaction. De manière connue le terminal spécifique 2 peut être conçu pour mettre en mémoire 20 ces données d'identité en liaison avec la transaction en cours et pour transmettre un signal de reconnaissance d'identité de carte, afin d'autoriser la suite du processus de communication.

Selon une variante préférée de l'invention, un clavier 11 est prévu sur chaque dispositif accréditif 1, il est éventuellement simplifié par rapport aux claviers classiques ; ce clavier 11 permet au porteur du dispositif accréditif de tabuler le code confidentiel choisi, qui a été déterminé par le titulaire du dispositif accréditif 1 et qui lui a été éventuellement communiqué par le titulaire, s'il n'est pas ce titulaire.

Le clavier 11 est relié à un premier registre temporaire 12 permettant la mémorisation du code confidentiel tabulé par le porteur, pour la durée de la transaction.

Le registre 12 est relié par ses sorties à un premier groupe d'entrées d'une logique de génération de clé d'individualisation 14, dont un second groupe d'entrées est relié à une mémoire de base de clé 17. La mémoire de base de clé 17 est une mémoire permanente normalement inacessible de l'extérieur après première inscription, elle contient une longue suite de données binaires, par exemple une suite de 56 éléments binaires, qui se combine avec le code confidentiel tabulé dans la logique de génération de clé 14. Cette combinaison s'effectue à l'aide de portes classiques, par exemple sur la base de circuits OU exclusif.

La clé d'individualisation obtenue est connue des machines de traitement centralisé 3 et d'elles seules ; c'est elle qui est associée aux données d'idendité de carte dans le fichier 32 des titulaires de dispositifs accréditifs en mémoire de ces machines 3. En conséquence la machine de traitement centralisé 3, qui est reliée au terminal spécifique 2 auquel est connecté le dispositif accréditif 1 considéré, est apte à trouver en fichier 32 la clé d'individualisation correspondant aux données d'identification reçues, ceci s'effectue par l'intermédiaire d'un classique décodeur d'adresse 31 activé par les données d'identification mises en mémoire dans un registre temporaire 30.

Il est à noter que le code confidentiel choisi par un titulaire de dispositif accréditif n'est pas transmis aux terminaux et aux machines de traitement et n'a donc pas à être connu par d'autres que le titulaire et ceux qu'il autorise à utiliser son dispositif accréditif.

Le porteur du dispositif accréditif 1 tabule personnellement les données de la transaction qui le concernent, par exemple la somme à payer, étant entendu que suivant l'exploitation choisie certaines données telles les données de temps peuvent être introduites soit au niveau du dispositif accréditif 1, soit au niveau du terminal 2, en particulier lorsque celui-ci est un terminal de point de vente.

Les données de transaction introduites par le porteur du dispositif accréditif 1 à l'aide du clavier 11, sont temporairement mémorisées dans un registre 13 de ce dispositif 1. Les sorties du registre 13 sont reliées en parallèle à un premier groupe d'entrées d'une logique de génération de chiffre-clé 15 et à au moins une borne de connexion B13 pour terminal de manière à permettre la transmission de ces données en série à l'extérieur du dispositif accréditif 1.

La logique de génération de chiffre-clé 15 assure la combinaison selon un algorithme de structure classique, des données de transaction, avec la clé d'invidualisation qui comporte par exemple 56 éléments binaires de manière que le chiffre-clé présente une grande complexité.

Dans l'exemple de réalisation choisi, la logique de génération 15 est consituée à partir d'un microprocesseur, assurant également d'autres tâches non mentionnées ici car sans rapport avec l'invention.

Le chiffre-clé obtenu est transmis à la machine de traitement centralisé 1 par l'intermédiaire du terminal spécifique 2, de même que les données de transaction contenues dans le registre 13 et les données d'identification et de transaction propres au titulaire du terminal qui sont préalablement mémorisées dans un ensemble de mémorisation 22 comprenant classiquement au moins une mémoire permanente d'informations d'identité et une mémoire inscriptible et effaçable d'informations de transaction.

De manière connue les données de transaction non confidentielles du registre 13 peuvent être enregistrées et affichées dans le terminal 2 par un dispositif classique d'enregistrement 21, pour contrôle avant émission et génération du chiffre-clé.

La machine de traitement centralisé 3 reçoit les données de transaction du porteur transmises en clair sous forme numérique ainsi que le chiffre-clé et les données d'identification et de transaction propres au terminal. Les données de transaction du porteur sont mémorisées temporairement dans un registre 33 dont les sorties sont reliées à une logique de détermination de chiffre clé 34 ayant un fonctionnement analogue à celui de la logique 15.

La sortie du fichier 32 est également reliée à la logique de détermination 34 de manière que celle-ci soit apte à déterminer un chiffre-clé à partir de la clé définie par le contenu du registre 30 et des données de transaction contenues dans le registre 33.

Le chiffre-clé produit par la logique de détermination 34 est transmis à un comparateur 36 qui reçoit également le chiffre-clé transmis par le dispositif accréditif 1 qui est mémorisé dans un registre 35.

Si les deux chiffres clés sont identiques, le comparateur émet un ordre de validation d'une part vers un dispositif de signalisation de validation 23 du terminal 2 et d'autre part vers l'entrée d'activation d'un registre d'entrée 37 de mémoire de transaction, de manière à permettre l'enregistrement des données fournies par le fichier 32, et les registres 33 et 39 ce dernier recevant les données de l'ensemble de mémorisation 22.

Le dispositif de signalisation de validation 23 est de type classique, il permet notamment la remise à zéro des registres du terminal 2 et du dispositif accréditif 1 ainsi que le retrait du dispositif accréditif.

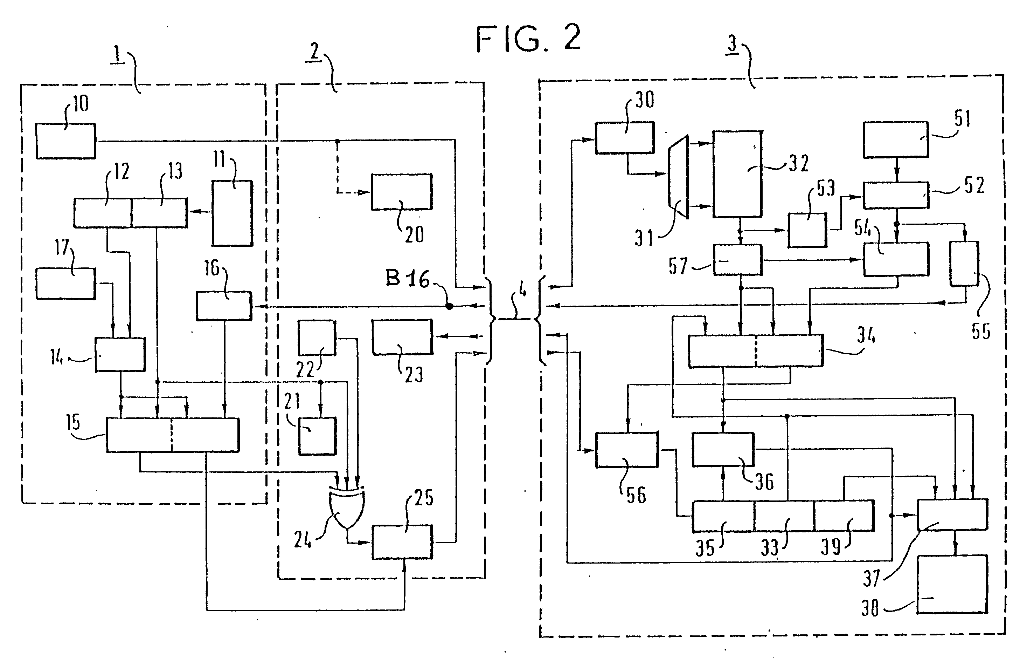

L'exemple de réalisation présenté à la figure 2 comporte un agencement de cryptage destiné à éviter la collecte d'informations sans autorisation par des tiers à l'aide de systèmes de saisie branchés sur les liaisons de transmissions.

Selon l'invention, le cryptage est effectué dans chaque terminal par un organe de cryptage 25 qui reçoit les données à coder et une clé de cryptage.

Selon l'invention la clé de cryptage est obtenue par traitement identique, par les dispositifs accréditifs 1 et par les machines de traitement centralisé 3, de nombres binaires générés par les uns ou par les autres.

Dans l'exemple de réalisation présenté, à la connexion d'un dispositif accréditif 1 dans un terminal spécifique 2, les données d'identité contenues dans la mémoire 10 d'un dispositif accréditif 1 sont transmises à la machine de traitement centralisé 3 chargée de traiter la transaction, cette transmission s'effectuant bien entendu par le terminal spécifique 2 auquel le dispositif accréditif 1 est connecté.

Ces données d'identité sont temporairement mémorisées dans un registre 30 qui commande l'adressage du fichier 32 via le décodeur d'adresse 31 ; le fichier 32 génère la clé d'individualisation qui correspond aux données d'identité et la fournit d'une part à la logique 34 et d'autre part à un contrôleur 53 chargé de vérifier sa conformité aux normes.

Le contrôleur 53 est une classique logique qui effectue par exemple un contrôle de parité et qui vérifie que la clé correspond bien à une clé en service. Selon l'invention la machine de traitement 3 comporte aussi un générateur de nombres binaires de cryptage 51 apte à produire de nombreuses combinaisons différentes dans un ordre aléatoire de manière à pouvoir attribuer un nombre imprévisible pour chaque nouvelle transaction traitée, ce nombre étant choisi différent de tout nombre déjà attribué à une transaction en cours.

A cette occasion il est rappelé que les machines de traitement centralisés sont des processeurs de type usuel dont la réalisation et les programmes ne seront pas décrits ici, dans la mesure où ceci n'entre pas dans le cadre de l'invention.

A réception d'une clé d'individualisation correcte, le contrôleur 53 active un registre tampon 52 situé en sortie du générateur de nombres binaires de cryptage 51 de manière à permettre la mise en mémoire 54 d'un nombre binaire déterminé à l'adresse que détermine la clé d'individualisation reçue et ce nombre est également transmis à une entrée de cryptage B16 du dispositif accréditif 1 concerné via un registre de transfert 55 de la machine de traitement centralisé, la liaison 4 et le terminal 2.

Le nombre de cryptage reçu qui est mémorisé dans un registre 16, et la clé d'individualisation, qui a été fournie par la logique de génération de clé 14, sont combinés selon l'algorithme de codage dans la logique de génération de chiffre-clé 15 de manière à produire une clé de cryptage pour le terminal spécifique 2.

La clé de cryptage est ensuite appliquée à un circuit de cryptage 25 de type classique qui travaille, selon un algorithme qui lui est propre, sur les informations à transmettre par la liaison 4. Dans l'exemple choisi ces informations, symboliquement appliquées à un ou 24, sont constituées par les données de transaction fournies par le dispositif accréditif 1, par le chiffre-clé obtenu comme précédemment en combinant la clé d'individualisation avec les données de transaction selon l'algorithme de codage dans la logique de génération de chiffre clé 15, ainsi que par les données d'identification et de transaction propres au terminal spécifique 2.

L'ensemble de ces données cryptées est transmis par la liaison 4 à un décrypteur 56, ce dernier reçoit aussi une clé de décryptage qui lui est fournie par la logique de détermination 34 à partir de la clé d'individualisation enregistrée dans une mémoire tampon 57 et du nombre de cryptage correspondant en mémoire 54. De manière connue cette clé de décryptage peut être soit identique à la clé de cryptage soit différente ayant été générée en même temps que cette dernière.

Le traitement des informations après décryptage est en tout point identique à celui décrit en relation avec la figure 1 et ne sera donc pas repris ici.

Il doit être compris que la représentation des logiques 15 et 34 est symbolique de manière à mieux faire saisir le fonctionnement de ces logiques, étant entendu que généralement les processeurs mis en œuvre dans ces logiques ne comportent pas d'entrées et de sorties en double, le fonctionnement correspondant étant obtenu par production successive de données en deux étapes distinctes.

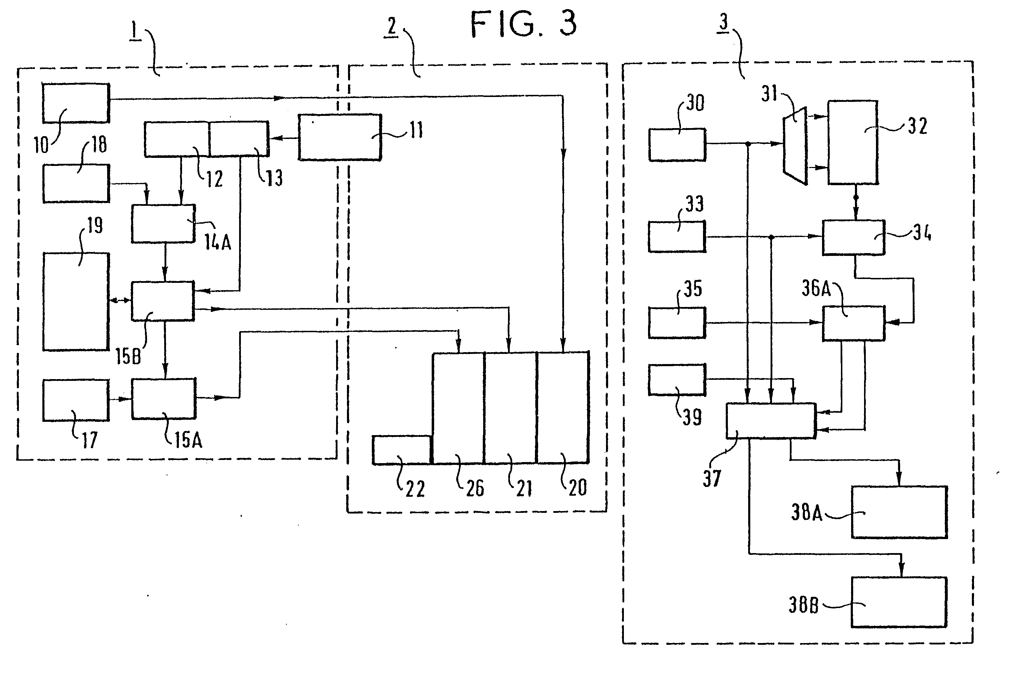

L'invention est également applicable à des systèmes dans lesquels les dispositifs accréditifs se connectent à des terminaux spécifiques qui conservent temporairement les données de transaction car ils ne sont pas continûment reliés aux machines de traitement centralisé ; un tel système est présenté figure 3.

Le dispositif accréditif 1 présenté figure 3 est voisin de ceux présentés aux figures précédentes toutefois il ne présente pas nécessairement de clavier 11, celui ci pouvant être alors rattaché aux terminaux spécifiques 2 et ceux-ci ne possèdent pas de liaisons de transmission permanente avec les machines de traitement centralisé 3.

En conséquence les informations entre terminaux 2 et machines 3 s'effectuent soit par paquets via une liaison de transmission temporaire, soit par l'intermédiaire de moyens de mémorisation transportables et les machines de traitement centralisé n'assurent aucune vérification au cours des échanges dispositifs accréditifs 1-terminaux spécifiques 2.

De même que précédemment chaque dispositif accréditif 1 comporte une mémoire permanente 10 pour les données d'identité qui lui sont propres, un registre 12 de données de code confidentiel et un registre 13 de données de transaction, ces deux registres étant reliés au clavier 11, directement si ce clavier 11 est sur le dispositif accréditif 1 lui même, ou par des bornes de connexion s'il est sur le terminal spécifique 20.

Classiquement une logique de contrôle 14A, reliée au registre 12 et à une mémoire de code confidentiel 18, permet de vérifier que le code confidentiel introduit par le porteur du dispositif accréditif 1 est le même que celui qui est mémorisé de manière permanente dans la mémoire 18.

La mémoire 18 préférablement de même type que la mémoire 10 est une mémoire permanente inaccessible de l'extérieur du dispositif après inscription du code confidentiel choisi par le titulaire du dispositif accréditif.

La logique de contrôle 14A est par exemple de type NAND elle autorise l'accès à une logique de gestion 15B, qui est reliée au registre 13 de données de transaction et à une mémoire de transaction 19 par ses entrées. La logique de gestion 15B peut éventuellement être une logique câblée classique, dans une variante préférée de réalisation elle est combinée avec une logique de génération de chiffre-clé 15A et se présente sous forme d'un microprocesseur.

La mémoire de transaction 19 est une classique mémoire lisible et inscriptible sous le contrôle de la logique de gestion 15B, elle permet par exemple de mémoriser le nombre, le montant et l'ordre des transactions bancaires effectuées à l'aide du dispositif accréditif 1 qui la comporte.

La logique de génération 15A, est reliée à une mémoire de clé d'individualisation 17, qui est permanente et inaccessible de l'extérieur du dispositif accréditif, elle reçoit les données de transaction entrées par le porteur du dispositif accréditif 1 ainsi que le numéro de transaction tel que défini à partir de la mémoire de transaction 19.

De même que précédemment, la logique de génération de chiffre-clé 15A combine selon un algorithme donné la clé issue de la mémoire de clé d'individualisation 17 avec les données et le numéro de transaction ; le chiffre-clé est transmis au terminal spécifique 2 via une connexion B15.

Le terminal spécifique 2 mémorise l'identité du dispositif accréditif, les données de la transaction et le chiffre-clé, tels que fournis par le dispositif accréditif 1, avec les données d'identification et de transaction générées par ce terminal spécifique 2, dans l'exemple choisi ceci est symbolisé par quatre mémoires 20, 21, 22 et 26.

Le contenu de ces quatre mémoires est transféré au moment voulu à une machine de traitement centralisé 1 pour exploitation.

La machine de traitement 1 est très voisine de celle présentée à la figure 1 elle comporte quatre mémoires 30, 33, 35, 39 correspondant respectivement aux mémoires 20, 21, 26 et 22.

La mémoire 30 permet de mémoriser les données d'identification des dispositifs accréditifs et de retrouver les clés d'individualisation correspondantes en fichier 32 par l'intermédiaire d'un décodeur d'adressage 31. A chaque groupe de données d'identification correspond une clé en fichier 32, un groupe de données de transaction en mémoires 33 et 39 et un chiffre-clé en mémoire 35.

La combinaison algorithmique d'une clé d'individualisation et du contenu correspondant en mémoire de données de transaction 33 permet de produire le chiffre-clé attendu, qui est comparé avec le chiffre clé correspondant au contenu en mémoire 35.

Le comparateur 36A chargé de la comparaison des chiffres-clé produit soit un signal de mémorisation en mémoire de transaction 38A soit un signal de mémorisation en mémoire d'erreur 38A suivant que le résultat de la comparaison est satisfaisant ou non. Ce signal de mémorisation est transmis à un ensemble d'enregistrement tampon 37 inséré en entrée des mémoires 38.

Bien entendu, ainsi qu'il a été dit plus haut la représentation des registres et autres composants de la machine de traitement 1 est symbolique et correspond plus aux fonctions remplies qu'aux circuits réels qui sont ceux d'un processeur spécialisé dont la constitution est définie en fonction de l'ensemble des critères du système.

De même que dans les cas précédents le titulaire, et à fortiori le porteur non titulaire, d'un dispositif accréditif 1 n'a pas accès à la clé d'individualisation de son dispositif accréditif ; de même ni le détenteur d'un terminal spécifique 2 lorsque le dispositif accréditif comporte un clavier ni la machine de traitement 3 n'ont connaissance ou accès aux codes confidentiels choisis par les titulaires de dispositifs accréditifs ce qui limite les risques de fraude aux différents niveaux.

Il doit également être compris que l'on peut éventuellement adopter une disposition de confidentialité au niveau des terminaux spécifiques qui soit analogue à celle adoptée pour les dispositifs accréditifs, en prévoyant une mémoire d'identité de terminal et des codes confidentiels différents, si différents individus peuvent être amenés à s'occuper d'un terminal spécifique en tant que détenteurs ou surveillants, étant entendu que ces derniers ne sont normalement ni titulaires, ni porteurs de dispositifs accréditifs 1, tels que décrits.

**Revendications**

1. Procédé de sécurité pour communication tripartite de données confidentielles sous forme numérique dans un système permettant l'échange d'informations entre des porteurs de dispositifs accréditifs (1) et des machines de traitement centralisé (3) par l'intermédiaire de terminaux spécifiques (2) non surveillés, dans lequel toute communication entre un porteur et une machine de traitement (3) implique la communication de l'identité du dispositif accréditif (1) utilisé par le porteur à la machine de traitement centralisé par connexion dudit dispositif accréditif dans un terminal spécifique (2) et la communication d'un code confidentiel spécifique du porteur au système par introduction manuelle de ce code par le porteur au niveau dispositif accréditif-terminal spécifique utilisé comportant les étapes suivantes lorsqu'une machine de traitement centralisé (3) est reliée en permanence avec le terminal spécifique (2) utilisé :

— détermination, dans le dispositif accréditif (1), d'une clé d'individualisation obtenue par combinaison du code confidentiel, introduit dans le dit dispositif accréditif après connexion de ce dernier dans le terminal spécifique utilisé (2) avec une base-clé mémorisée de manière permanente dans ledit dispositif accréditif ;

— détermination, dans le dispositif accréditif, d'un chiffre-clé d'identification du porteur et d'authentification d'une transaction par combinaison des données de la transaction, introduites par le porteur, avec ladite clé d'individualisation déterminée dans ledit dispositif accréditif à la réception du code confidentiel du porteur ;

— communication à la machine de traitement centralisé (3), par l'intermédiaire du terminal spécifique (2) utilisé, dudit chiffre-clé, desdites données de la transaction et de ladite identité du dispositif accréditif (1), tels qu'ils sont fournis par ledit dispositif accréditif (1), et

— communication à ladite machine de traitement centralisé (3) de données propres au terminal spécifique (2) utilisé.

2. Procédé de sécurité pour communication tripartite de données confidentielles sous forme numérique dans un système permettant l'échange d'information entre des porteurs de dispositifs accréditifs (1) et des machines de traitement centralisé (3) par l'intermédiaire de terminaux spécifiques (2) non surveillés, dans lequel toute communication entre un porteur et une machine de traitement (3) implique la communication de l'identité du dispositif accréditif (1) utilisé par le porteur à la machine de traitement centralisé (3) par connexion dudit dispositif accréditif (1) dans un terminal spécifique (2) et la communication d'un code confidentiel spécifique du porteur au système par introduction manuelle de ce code par le porteur au niveau dispositif accréditif-terminal spécifique utilisé comportant les étapes suivantes lorsqu'une machine de traitement centralisé (3) n'est pas reliée en permanence avec le terminal spécifique (2) utilisé :

— comparaison, dans ledit dispositif accréditif, dudit code confidentiel, introduit dans ledit dispositif accréditif par le porteur après connexion dudit dispositif accréditif (1) au terminal spécifique (2) qu'il utilise, avec un code confidentiel mémorisé dans le dispositif accréditif ;

— détermination, dans le dispositif accréditif (1), d'un chiffre-clé d'identification du porteur et d'authentification d'une transaction par combinaison des données de la transaction introduites par le porteur avec une clé d'individualisation mémorisée de manière permanente dans le dispositif accréditif, si le code confidentiel introduit correspond au code confidentiel mémorisé ;

— enregistrement, dans le terminal spécifique (2) utilisé, dudit chiffre-clé, desdites données de la transaction et de l'identité dudit dispositif accréditif (1), tels qu'ils sont fournis par ledit dispositif accréditif (1), en vue de leur communication ultérieure à la machine de traitement centralisé (3) conjointement avec des données propres au terminal spécifique (2) utilisé.

3. Procédé selon la revendication 1, comportant les étapes supplémentaires suivantes :

— génération, dans la machine de traitement centralisé (3) à laquelle est relié le terminal spécifique (2) utilisé, d'un nombre de cryptage à la réception, par ladite machine de traitement centralisé (3), de ladite identité dudit dispositif accréditif (1) connecté audit terminal spécifique (2) utilisé ;

— transmission dudit nombe de cryptage depuis ladite machine de traitement centralisé (3) audit dispositif accréditif (1), par l'intermédiaire dudit terminal spécifique (2) utilisé ;

— génération d'une clé de cryptage dans le dispositif accréditif (1) par combinaison dudit nombre de cryptage avec ladite clé d'individualisation produite dans ledit dispositif accréditif (1) ;

— cryptage dudit chiffre-clé et des données de la transaction dans ledit terminal spécifique (2) à l'aide de ladite clé de cryptage fournie par ledit dispositif accréditif (2) pour la transaction en cours, de manière à transmettre des données cryptées à ladite machine de traitement centralisé (3) concernée.

4. Dispositif accréditif (1) pour mise en œuvre du procédé selon la revendication 1 caractérisé en ce qu'il comporte :

— une mémoire permanente de données d'identité (10), accessible en lecture à partir d'un terminal (2) spécifique après connexion à ce dernier ;

— une mémoire permanente de base-clé (17) inaccessible de l'extérieur dudit dispositif accréditif (1) ;

— une logique de génération de clé d'individualisation (14) reliée en sortie d'un clavier (11) et de la mémoire de base-clé (17) ;

— une logique de génération de chiffre-clé (15) par combinaison de la clé d'individualisation avec les données de transaction introduites au clavier (11), cette logique de génération de chiffre-clé (15) étant reliée en ce but par ses entrées en sortie du clavier (11) et de la logique de génération de clé d'individualisation (14) et par sa sortie à au moins une borne externe de connexion (B15) pour le terminal (2) en vue de la transmission du chiffre clé généré à une machine de traitement centralisé (3).

5. Dispositif accréditif (1) selon la revendication 4, caractérisé en ce que la logique de génération de chiffre-clé (15) comporte de plus une entrée de cryptage (B16) accessible de l'extérieur à partir d'une machine de traitement centralisé (3), via un terminal spécifique (2) auquel le dispositif accréditif (1) est relié, de manière à générer une clé de cryptage à destination de ce terminal spécifique (2) par combinaison de la clé d'individualisation du dispositif accréditif avec un nombre de cryptage reçu via l'entrée de cryptage (B16).

6. Dispositif accréditif (1) pour la mise en œuvre du procédé selon la revendication 2, comportant classiquement des mémoires d'identité du dispositif, de code confidentiel et de transactions (10, 18, 19) ainsi que des logiques de gestion des transactions et de comparaison (15B, 14A) du code confidentiel mémorisé avec le code introduit à chaque transaction, ledit dispositif étant caractérisé en ce qu'il comporte de plus :

— une mémoire permanente de clé d'individualisation (17), inaccessible de l'extérieur du dispositif accréditif ;

— une logique de génération de chiffre-clé (15A) par combinaison de la clé d'individualisation du dispositif (1) contenue dans ladite mémoire de clé d'individualisation (17) avec les données introduites par l'intermédiaire d'un clavier (11) et le numéro de transaction, cette logique de génération (15A) étant reliée en ce but par ses entrées en sortie de la logique de gestion des transactions (15B) et de la mémoire de clé d'individualisation (17) et par sa sortie à au moins une borne externe de connexion pour le terminal (2) en vue de la transmission du chiffre-clé ainsi généré au terminal spécifique (2) auquel ce dispositif accréditif (1) est connecté.

7. Dispositif accréditif selon la revendication 6, dans lequel la logique de génération de chiffre-clé (15A) et la logique de gestion (15B) sont confondues.

## Claims

1. A security method for the three-way communication of confidential digital data in a system which allows the exchange of informations between bearers of crediting means (1) and centralized processing machines (3) via non-supervised specific terminals (2), in which method any communication between a bearer and a processing machine (3) entails communication of the identity of the crediting means (1) used by the bearer to the centralized processing machine by connecting said crediting means to in specific terminal (2), and the communication of a specific confidential code of the bearer to the system by a manual insertion of this code by the bearer at the level of the crediting means — specific terminal used, the method including the following steps in case a centralized processing machine (3) is permanently connected to the specific terminal used (2) :

— in the crediting means (1), an individualisation key is determined which is obtained by combining the confidential code inserted into said crediting means after connection of the latter in the specific terminal used, with a basic key stored in a permanent manner in said crediting means ;

— in the crediting means, a key digit for identifying the bearer and for approving a transaction is determined by the combination of the transaction data inserted by the bearer with said individualisation key determined in said crediting means at the reception of the confidential code of the bearer ;

— the key digit, the transaction data and the identity of the crediting means (1) are communicated to the centralized processing machine (3) via the specific terminal used (2) in the same way as they are delivered by the crediting means (1) and

— data which are inherent to the specific terminal used (2) are communicated to the centralized processing machine (3).

2. A security method for the three-way communication of confidential data in a system which allows the exchange of informations between bearers of crediting means (1) and centralized processing machines (3) via non-supervised specific terminals (2), in which method any communication between a bearer and a processing machine (3) entails communication of the identity of the crediting means (1) used by the bearer to the centralized processing machine by connecting said crediting means to in specific terminal (2), and the communication of a specific confidential code of the bearer to the system by a manual insertion of this code by the bearer at the level of the crediting means — specific terminal used, the method including the following steps in case a centralized processing machine (3) is not permanently connected to the specific terminal used (2) :

— in said crediting means, the confidential code inserted into said crediting means by the bearer after connection of said crediting means (1) to the specific terminal used (2) is compared to a confidential code which is stored in the crediting means ;

— in the crediting means (1), a key digit for identifying the bearer and for approving a transaction is determined by the combination of the transaction data inserted by the bearer with an individualisation key stored in a permanent manner in the crediting means, if the introduced confidential code corresponds to the stored confidential code ;

— in the specific terminal used (2), the key digit, the transaction data and the identity of the crediting means (1) such as they are delivered by the crediting means (1) are registered in view of their later communication to the centralized processing machine (3) together with data inherent to the specific terminal used (2).

3. A method according to claim 1, including the following supplementary steps :

— in the centralized processing machine (3), to which the specific terminal used (2) is connected, an enciphering number is created at the reception, by said centralized processing machine (3), of said identity of the crediting means (1) conneted to said specific terminal used (2) ;

— said enciphering number is transmitted from said centralized processing machine to said crediting means (1) via said specific terminal used (2) ;

— an enciphering key is created in the crediting means (1) by the combination of said enciphering number with said individualisation key produced in the crediting means (1) ;

— the key digit and the transaction data are enciphered in said specific terminal (2) by means of said enciphering key delivered by said crediting means (1) for the current transaction in order to transmit the enciphered data to said concerned centralized processing machine (3).

4. A crediting means (1) for putting the method according to claim 1 into practice, characterized in that it comprises :

— a read-only memory for storing the identity data (10), this memory being accessible for reading purposes from a specific terminal (2) after the branching of the latter ;

— a read-only memory for storing the key basis (17) which is not accessible from the outside of the crediting means (1) ;

— a logic unit for creating an individualisation key (14) connected to the output of a keyboard (11) and of the memory for storing the key basis (17) ;

— a logic unit for creating a key digit (15) combining the individualisation key with the transaction data inserted through the key board (11), this logic unit (15) being connected to this aim through its inputs to the outputs of the keyboard (11) and of the logic unit for creating the individualisation key (14), and by its output to at least one outer connection terminal (B15) for the terminal (2) with a view to transmit the created key digit to a centralized processing machine (3).

5. A crediting means (1) according to claim 4, characterized in that the logic unit for creating the key digit (15) further includes an enciphering input (B16) which is accessible from the outside from a centralized processing machine (3) via a specific terminal (2) to which the crediting means (1) is connected, in such a way that an enciphering key destined for this specific terminal (2) is created by the combination of the individualisation key of the crediting means with an enciphering number received through the enciphering input (B16).

6. A crediting means (1) for putting the method according to claim 2 into practice, conventionally comprising memories for storing the identity of the means, for storing the confidential code and for storing the transactions (10, 18, 19), as well as logic units for the treatment of the transactions and for the comparison (15B, 14A) of the stored confidential code with the code inserted together with each transaction, said means being characterized in that it further comprises :

— a read-only memory for storing the individualisation key (17) which is inaccessible from outside the crediting means ;

— a logic unit for creating a key digit (15A) by combining the individualisation key of the means (1) contained in said individualisation key memory (17) with the data inserted through a keyboard (11) and the number of the transaction, this logic unit (15A) being connected to this aim through its inputs to the output of the logic unit for treating the transactions (15B) and of the individualisation key memory (17) and through its output to at least one outer connection terminal for the terminal (2) in view of the transmission of this created key digit to the specific terminal (2) to which the crediting means (1) is connected.

7. A crediting means according to claim 6, in which the logic unit for creating the key digit (15A) and the logic unit for treating the transactions (15B) are one and the same unit.

**Patentansprüche**

1. Sicherheitsverfahren für die Dreierkommunikation von vertraulichen Daten in digitaler Form in einem System, das den Austausch von Informationen zwischen Besitzern von Akkreditivgeräten (1) und zentralen Verarbeitungsmaschinen (3) über spezifische, nicht überwachte Endgeräte (2) erlaubt, wobei jede Kommunikation zwischen einem Besitzer einer Akkreditivvorrichtung und einer zentralen Verarbeitungsmaschine (3) die Übermittlung der Identität der vom Besitzer verwendeten Akkreditivvorrichtung (1) an die zentrale Verarbeitungsmaschine durch die Verbindung dieser Akkreditivvorrichtung in einem spezifischen Endgerät (2), sowie die Übermittlung eines für den Besitzer spezifischen vertraulichen Kodes an das System durch manuelle Eingabe dieses Kodes durch den Besitzer in Höhe Akkreditivvorrichtung-spezifisches verwendetes Endgerät einschließt und wobei das Verfahren folgende Schritte aufweist, wenn eine zentrale Verarbeitungsmaschine (3) dauernd mit dem verwendeten spezifischen Endgerät (2) in Verbindung steht :

— in der Akkreditivvorrichtung (1) wird ein Individualisationsschlüssel bestimmt, der durch Kombination des in diese Akkreditivvorrichtung nach deren Verbindung im verwendeten spezifischen Endgerät eingegebenen vertraulichen Kodes mit einem dauerhaft in der Akkreditivvorrichtung gespeicherten Basisschlüssel erhalten wird ;

— in der Akkreditivvorrichtung wird eine Schlüsselziffer zur Identifizierung des Besitzers und zur Authentifizierung einer Transaktion durch Kombination der vom Besitzer eingegebenen Transaktionsdaten mit dem Individualisationsschlüssel bestimmt, der in dieser Akkreditivvorrichtung bei Empfang des vertraulichen Kodes des Besitzers bestimmt wird ;

— der zentralen Verarbeitungsmaschine (3) werden über das verwendete spezifische Endgerät (2) die Schlüsselziffer, die Transaktionsdaten und die Identität der Akkreditivvorrichtung (1) übermittelt, so wie sie von der Akkreditivvorrichtung (1) geliefert werden, und

— dem verwendeten spezifischen Endgerät (2) eigene Daten werden der zentralen Verarbeitungsmaschine (3) übermittelt.

2. Sicherheitsverfahren für die Dreierkommunikation von vertraulichen Daten in digitaler Form in einem System, das den Austausch von Informationen zwischen Besitzern von Akkreditivgeräten (1) und zentralen Verarbeitungsmaschinen (3) über spezifische, nicht überwachte Endgeräte (2) erlaubt, wobei jede Kommunikation zwischen einem Besitzer einer Akkreditivvorrichtung und einer Zentralen Verarbeitungsmaschine (3) die Übermittlung der Identität der vom Besitzer verwendeten Akkreditivvorrichtung (1) an die zentrale Verarbeitungsmaschine durch die Verbindung dieser Akkreditivvorrichtung in einem spezifischen Endgerät (2), sowie die Übermittlung eines für den Besitzer spezifischen vertraulichen Kodes an das System durch manuelle Eingabe dieses Kodes durch den Besitzer in Höhe Akkreditivvorrichtung-spezifisches verwendetes Endgerät einschließt und wobei das Verfahren folgende Schritte aufweist, wenn eine zentrale Verarbeitungsmaschine (3) nicht dauernd mit dem verwendeten spezifischen Endgerät (2) verbunden ist :

— in der Akkreditivvorrichtung wird der in die Akkreditivvorrichtung vom Besitzer nach der Verbindung der Akkreditivvorrichtung (1) mit dem verwendeten spezifischen Endgerät (2) eingegebene vertrauliche Kode mit einem in der Akkreditivvorrichtung gespeicherten vertraulichen Kode verglichen ;

— in der Akkreditivvorrichtung (1) wird eine Schlüsselziffer zur Identifizierung des Besitzers und zur Authentifizierung einer Transaktion durch Kombination der vom Besitzer eingegebenen Transaktionsdaten mit einem dauerhaft in der Akkreditivvorrichtung gespeicherten Individualisationsschlüssel bestimmt, wenn der eingegebene vertrauliche Kode dem gespeicherten vertraulichen Kode entspricht ;

— im verwendeten spezifischen Endgerät (2) werden die Schlüsselziffer, die Transaktionsdaten und die Identität der Akkreditivvorrichtung (1) so, wie sie von der Akkreditivvorrichtung (1) geliefert wurden, in Hinblick auf ihre spätere Übermittlung an die zentrale Verarbeitungsmaschine (3) gemeinsam mit Daten, die dem verwendeten spezifischen Endgerät (2) eigen sind, registriert.

3. Verfahren nach Anspruch 1, das folgende zusätzliche Verfahrensschritte umfaßt :

— in der zentralen Verarbeitungsmaschine (3), an die das verwendete spezifische Endgerät (2) angeschlossen ist, wird eine Verschlüsselungszahl beim Empfang der Identität der Akkreditivvorrichtung (1) erzeugt, die mit dem verwendeten spezifischen Endgerät (2) verbunden ist ;

— die Verschlüsselungszahl wird von der zentralen Verarbeitungsmaschine (3) an die Akkreditivvorrichtung (1) über das verwendete spezifische Endgerät (2) übertragen ;

— ein Verschlüsselungsschlüssel wird in der Akkreditivvorrichtung (1) durch Kombination der Verschlüsselungszahl mit dem in der Akkreditivvorrichtung (1) erzeugten Individualisationsschlüssel erzeugt ;

— die Schlüsselziffer und die Transaktionsdaten werden in dem spezifischen Endgerät (2) mithilfe des Verschlüsselungsschlüssels verschlüsselt, der von der Akkreditivvorrichtung (1) für die gerade ablaufende Transaktion geliefert wurde, so daß verschlüsselte Daten der betroffenen zentralen Verarbeitungsmaschine zugeführt werden.

4. Akkreditivvorrichtung (1) zur Durchführung des Verfahrens nach Anspruch 1, dadurch gekennzeichnet, daß sie enthält :

— Einen Festwertspeicher für die Identitätsdaten (10), der von einem spezifischen Endgerät (2) nach dessen Verbindung mit dem Speicher abfragbar ist,

— einen von außerhalb der Akkreditivvorrichtung (1) nicht zugänglichen Festwertspeicher für die Schlüsselbasis (17),

— eine Logik zur Erzeugung des Individualisationsschlüssels (14), deren Eingänge mit einem Tastenfeld (11) und dem Schlüsselbasis-Speicher (17) verbunden sind,

— eine Logik zur Erzeugung der Schlüsselziffer (15) durch Kombination des Individualisationsschlüssels mit den auf der Tastatur (11) eingegebenen Daten der Transaktion, wobei diese Logik (15) zu diesem Zweck über ihre Eingänge an den Ausgang des Tastenfelds (11) und den Ausgang des Logik zur Erzeugung des Individualisationsschlüssels (14) angeschlossen ist und über ihren Ausgang mit mindestens einer äußeren Verbindungsklemme (B15) für das Endgerät (2) verbunden ist, um die Übertragung der erzeugten Schlüsselziffer an eine zentrale Verarbeitungsmaschine (3) zu ermöglichen.

5. Akkreditivvorrichtung (1) nach Anspruch 4, dadurch gekennzeichnet, daß die Logik zur Erzeugung der Schlüsselziffer (15) außerdem einen Verschlüsselungseingang (B16) aufweist, der von außen von einer zentralen Verarbeitungsmaschine (3) über ein spezifisches Endgerät (2) zugänglich ist, an das die Akkreditivvorrichtung (1) angeschlossen ist, so daß ein Verschlüsselungsschlüssel für dieses spezifische Endgerät (2) durch Kombination des Individualisationsschlüssels der Akkreditivvorrichtung mit einer über den Verschlüsselungseingang (B16) empfangenen Verschlüsselungszahl erzeugt wird.

6. Akkreditivvorrichtung (1) zur Durchführung des Verfahrens nach Anspruch 2, die üblicherweise Speicher für die Identität der Vorrichtung, für vertraulichen Kode und für Transaktionen (10, 18, 19) sowie Logikbausteine für die Bearbeitung der Transaktion und für den Vergleich (15B, 14A) des gespeicherten vertraulichen Kodes mit dem bei jeder Transaktion eingegebenen Kode aufweist, dadurch gekennzeichnet, daß die Vorrichtung außerdem aufweist :

— einen Festwertspeicher für den Individualisationsschlüssel (17), der von außerhalb der Akkreditivvorrichtung nicht zugänglich ist,

— eine Logik zur Erzeugung der Schlüsselziffer (15A) durch Kombination des Individualisationsschlüssels der Vorrichtung (1), der in dem Individualisationsschlüssel-Speicher (17) enthalten ist, mit den über ein Tastenfeld (11) eingegebenen Daten und der Nummer der Transaktion, wobei diese Logik (15A) zu diesem Zweck mit ihren Eingängen an den Ausgang der Logik zur Bearbeitung der Transaktionen (15B) und den Ausgang des Individualisationsschlüssel-Speichers (17) sowie mit ihrem Ausgang an mindestens eine äußere Verbindungsklemme für das Endgerät (2) angeschlossen ist, um die so erzeugte Schlüsselziffer dem spezifischen Endgerät (2) mitzuteilen, an das diese Akkreditivvorrichtung (1) angeschlossen ist.

7. Akkreditivvorrichtung nach Anspruch 6, in der die Logik zur Erzeugung der Schlüsselziffer (15A) und die Logik zur Bearbeitung (15B) eine gemeinsame Logik bilden.

FIG. 1

# FIG. 2

0 055 986

# FIG. 3